# EUROPEAN PATENT SPECIFICATION

(11) **EP 1 688 239 B1**
(45) Date of publication and mention of the grant of the patent: **02.12.2009**
(21) Application number: 06100968.4
(22) Date of filing: 27.01.2006
(51) Int. Cl.: B29C 73/22, B29C 73/16, C08L 23/22

(54) **Method for making a tire with a built-in-sealant and tire obtained thereby**
Verfahren zur Herstellung eines Reifens mit einem eingebrachten Dichtmittel und damit hergestellter Reifen
Procédé de fabrication d'un pneu contenant un agent d'étanchéité et pneu ainsi obtenue

(30) Priority: 28.01.2005 US 648329 P
(43) Date of publication of application: 09.08.2006
(73) Proprietor: The Goodyear Tire & Rubber Company, Akron, OH 44316-0001 (US)
(72) Inventor: Botts, Bina Patel, Cuyahoga Falls, OH Ohio 44223 (US); Ruegg, jr., Michael Charles, Akron, OH Ohio 44301 (US); Kohut, Brandy Cyan, Akron, OH Ohio 44305 (US); Ripple, Warren, North Canton , OH Ohio 44720 (US); Banas, Mark David, Cuyahoga Falls, OH Ohio 44223 (US)
(74) Representative: Kutsch, Bernd

(56) References cited:
- EP-A- 0 264 506
- EP-A- 0 329 454
- EP-A- 1 393 932
- EP-A- 1 426 201
- US-A- 2 244 648
- US-A- 3 563 294
- US-A- 4 140 167
- US-A- 4 286 643
- US-A- 4 895 610
- US-A- 5 116 449
- US-A- 6 013 697
- US-A1- 2003 230 376
- US-A1- 2004 159 386

## Description

### Technical Field

This invention relates to a method for applying a puncture sealant to tire components mounted upon a tire building drum, and to a tire having such a built-in sealant.

US-A- 4,286,643 describes a tire whose inner wall is covered with a self-sealing product which is contained between two layers of elastomer and divided transversely by partitions of elastomer. The self-sealing product is applied by helically winding a strip over the inner liner and layering a tire component over the strip mounted over the inner liner. Other tires having built-in sealant layers are described in US-A- 4,140,167, EP-A- 1 426 201, EP-A- 0 264 506 and US-A- 2003/230376.

EP-A- 1 393 932 and EP-A- 0 329 454 describe that colours other than carbon black can be used for sealant compositions in order to enable the detection of a puncture against the black colour of a tire tread.

### Definitions

"Axial" and "axially" means the lines or directions that are parallel to the axis of rotation of the tire.

"Inner Liner" means the layer or layers of elastomer or other material that form the inside surface of a tubeless tire and that contain the inflating fluid within the tire.

"Radial" and "radially" mean directions radially toward or away from the axis of rotation of the tire.

### Summary of the Invention

The invention relates to a method according to claim 1 and to a tire according to claim 6.

Dependent claims cover preferred embodiments of the invention.

### Brief Description of the Drawings

The structure, operation, and advantage of the invention will become further apparent upon consideration of the following description taken in conjunction with the accompanying drawings wherein:
Figure 1 is a schematic view of a cross section of a tire with a sealant;
Figure 2 is a schematic view of a cross section of the sealant, barrier and innerliner layers;
Figure 3 is a schematic view of a cross section of the sealant, barrier and innerliner layers in an alternative embodiment.

### Detailed Description of the Invention

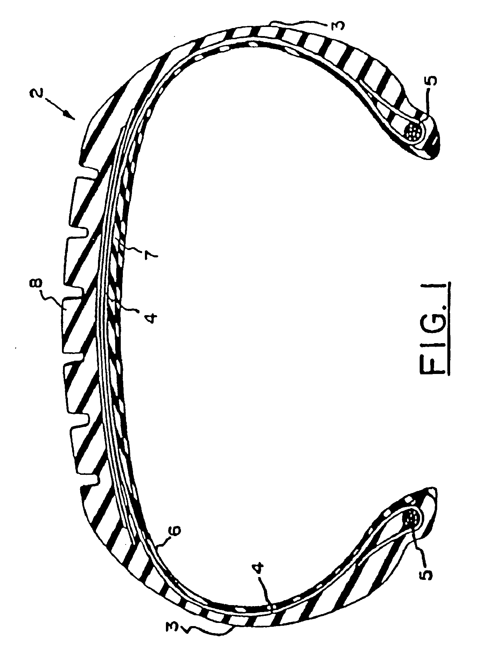

Referring now to Figures 1, ,2 and 3, there is illustrated a cross-sectional view of a self-sealing pneumatic tire constructed in accordance with the invention. The tire 2 includes sidewalls 3, a supporting tire carcass 4, a pair of beads 5, an inner liner 6, a sealant layer 7, a barrier layer 9 and an outer circumferential tread 8. The sidewalls 3 extend radially inward from the axial outer edges of the tread portion 8 to join the respective beads. The carcass 4 acts as a support structure for the tread and sidewalls, and is comprised of one or more layers of ply. Sealant layer 7 is shown disposed between the inner liner 6 and a barrier layer 9. The sealant layer 7 may also be disposed at different locations as described in more detail below. The tread region 8 forms a crown region of the carcass. In the interior region of the tread, there is generally found one or more belts. The surface region of the tread forms a tread pattern.

The sealant layer 7 may comprise polymer compositions such as described in US-B- 4,895,610. The polymer compositions described therein include the following composition by weight: 100 parts of a butyl rubber copolymer, 10 to 40 parts of carbon black, 5 to 35 parts of polyisobutylene, 5 to 35 parts of an oil extender, 0 to 1 part of sulfur, and from 1 to 8 parts of a peroxide vulcanizing agent. A second polymer composition includes the following composition by weight: 100 parts of a butyl rubber copolymer, 20 to 30 parts of carbon black, 8 to 12 parts of polyisobutylene, 8 to 12 parts of an oil extender, 0.1 to 0.4 part of sulfur, and from 2 to 4 parts of a peroxide vulcanizing agent.

The sealant layer 7 may also comprise a colored polymer composition such as described in US-A- 2005/0113502. The colored polymer sealant composition of the tire according to claim 6 comprises, based upon parts by weight per 100 parts by weight of said partially depolymerized butyl rubber exclusive of carbon black:
(A) a partially organoperoxide-depolymerized butyl rubber as a copolymer of isobutylene and isoprene, wherein said butyl rubber, prior to such depolymerization, is comprises 0.5 to 5, preferably within a range of from 0.5 to 1, percent units derived from isoprene, and correspondingly from 95 to 99.5, preferably within a range of from 99 to 99.5, weight percent units derived from isobutylene;
(B) a particulate reinforcing filler comprising:
   (1) 20 to 50 phr of synthetic amorphous silica, preferably precipitated silica, or
   (2) 15 to 30 phr synthetic amorphous silica, preferably precipitated silica, and 5 to 20 phr of clay, preferably kaolin clay, or
   (3) 15 to 30 phr synthetic amorphous silica, preferably precipitated silica, and 5 to 20 phr of calcium carbonate,
   (4) 15 to 30 phr synthetic amorphous silica, preferably precipitated silica, 5 to 15 phr of clay, preferably kaolin clay, and 5 to 15 phr of calcium carbonate;
(C) from zero to 6, alternately 0.5 to 5, phr of short organic fibers
(D) a colorant of other than a black color wherein said colorant is selected from at least one of organic pigments, inorganic pigments and dyes, preferably from organic pigments and inorganic pigments;
(E) from zero to 20, alternately 2 to 15, phr of rubber processing oil, preferably a rubber processing oil having a maximum aromatic content of 15 weight percent, and preferably a naphthenic content in a range of from 35 to 45 weight percent and preferably a paraffinic content in a range of 45 to 55 weight percent.

Other sealant polymer compositions which may be utilized by the invention are described in US-B-6,837,287.

Further, a sealant polymer composition may also be used with the invention that has a polymer composition of butyl rubber and an organoperoxide vulcanizing agent which becomes activated at high temperatures above 100°.

A first embodiment of manufacturing a tire is described as follows. The sealant polymer composition is mixed using a banbury mixer, at an optional remote location from the tire building plant or at the tire building plant. After the polymer composition is mixed, the polymer composition is then milled and formed into sheets of the material, wherein the sheets are separated from each other by silicone coated liners. One example of a silicone coated liner which will separate from the polymer composition is a silicone coated woven fiberglass cloth (coated on both sides of the liner) made by Precision Coating Co., Inc., of Dedham, MA and sold under the trade name S/W 10. Another example of a liner which would separate from the polymer composition is a siloxane coated nylon cloth made by Highland Industries.

Next, the sheets of the sealant polymer composition are separated from the liner and fed into one or more mills or heated calender rolls which break down the compound and soften it up by heating. One or more of the mills may be optionally corrugated. The rolls are preferably heated to a temperature sufficient to prevent sticking of the sealant to the rolls. The one or more mills output a continuous strip of sealant polymer composition 15.8 cm to 20.3 cm wide.

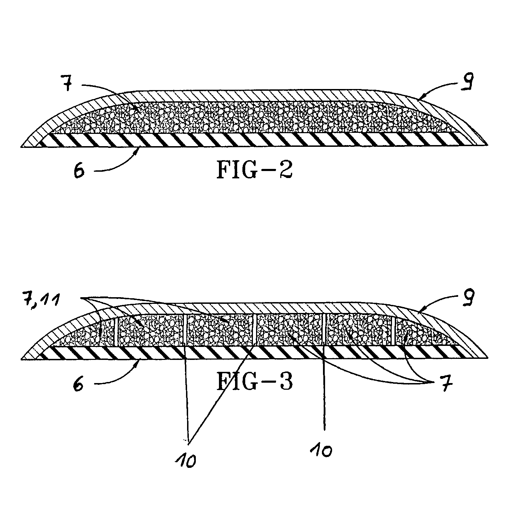

Next the continuous strip of sealant polymer composition is fed strip into a hot feed screw type extruder wherein the sealant polymer composition is heated to 93°C to 105°C, more preferably in the range of 101°C to 103°C. The extruder has a die to form the sealant polymer composition into its final shape, which is shown in Figure 2. The final shape of the sealant has a cross-sectional shape that has an upper and lower surface that are approximately parallel, with angled or tapered sidewalls. The angle of the tapered edges range from 15 to 30 degrees. The uncured width of the sealant is 15.8 cm to 22.9 cm or a width sufficient to extend from shoulder to shoulder of the tire. The uncured thickness of the sealant is 0.64 cm, although the range of the thickness and width can very depending upon the application. The uncured thickness may range from 0.125 cm to 1.90 cm. For example, if the sealant is used in a passenger tire, an uncured thickness of 0.32 cm may be desired, while for a truck tire an uncured thickness of 0.64 cm in may be desired.

A cold feed extruder may also be utilized, eliminating the need for preheating of the sealant polymer composition. The internal temperature controls of the cold feed extruder may be utilized to heat the composition in the range of 93°C to 105°C, more preferably in the range of 101°C to 103°C.

The output of the extruder is fed onto a conveyor belt. The extruded sealant polymer composition may then be optionally sprayed with water or cooled gas to cool the sealant polymer composition to below 38°C.

The extruded sealant may then be cut to length with a heated knife or ultrasonic knife and then the composition may be stored in steel tray storage trucks or bear traps.

During the entire processing of the sealant prior to vulcanization, it is preferred that the temperature of the sealant be below the peroxide activation temperature.

In a second embodiment of the invention, a gear pump extruder may be utilized, eliminating the need for preheating of the sealant polymer composition. Varying the extruder speed can independently control the temperature of the sealant composition. Further, the gear pump is a constant volume device, which will allow application of the sealant composition directly onto the tire building drum. An advantage to the gear pump extruder allows the starting and stopping of the output extrudate without wasting material.

A third embodiment of a manufacturing process for making a tire with a sealant layer is described as follows. First the polymer composition selected for use in the sealant layer 7 is mixed in a banbury mixer. The polymer composition is then fed to an extruder, either a hot feed extruder or a cold feed extruder. The extruder has a screw feed mechanism and a die. The die is shaped to form a cross-sectional shape of the extruded sealant as shown in Figure 2. The cross-sectional shape of the sealant is approximately an elongated rectangle with angled or beveled outer edges. The strip output from the extruder has a width in the range of 15.8 to 20.3 cm. The strip is extruded onto a spacer fabric which has spacers on the side of the fabric to ensure that the composition does not get deformed when rolled up and stored on a spool. The spool can then be transported to the tire building drum where the sealant component is cut to the desired length and mounted to the tire.

The sealant layer in all of the above embodiments may be positioned between the innerliner and barrier layer or between the innerliner and carcass. It is preferred that the sealant layer be completely encased or encapsulated between the rubber layers to prevent migration of the sealant. The built-in sealant layer may, for example, be positioned between a tire innerliner rubber layer and tire carcass or between two tire innerliner rubber layers wherein said sealant layer may:
(A) extend from one shoulder of the tire to the other through the crown region of the tire;
(B) be positioned in at least one tire shoulder area region and extend into at least a portion of the adjoining tire sidewall portion of the tire, or
(C) extend from sidewall-to-sidewall through the tire crown region.

When the sealant layer is positioned between a first rubber layer and a second rubber layer, it is preferred that the sealant splice be located at a different location than the splice of the first and second layers. It is also preferred that the sealant splice be stitched before the second rubber layer is added thereon.

The thickness of the sealant composition layer can vary greatly in an unvulcanized puncture sealant-containing tire. Generally, the thickness of the sealant composition layer may range from 0.13 cm to 1.9 cm. In passenger tires it is normally desired for the sealant composition layer to have a thickness of 0.32 cm (0.125 inches) whereas for truck tires, a thickness of 0.76 cm (0.25 inches) or greater might be desired.

After the unvulcanized pneumatic rubber tires of this invention are assembled they are vulcanized using a normal tire cure cycle. The tires of this invention can be cured over a wide temperature range. For example, passenger tires might be cured at a temperature ranging from 130°C to 170°C and truck tires might be cured at a temperature ranging from 130°C to 170°C. Thus, a cure temperature may range, for example, from 130°C to 170°C and for a period of time (e.g. from 10 to 45 minutes or more depending somewhat upon the size of the tire and the degree of desired depolymerization of the butyl rubber as well as the thickness of the sealant layer itself) and sufficient to at least partially depolymerize said sealant precursor layer to the aforesaid storage modulus (G') physical property. In practice, a period of time used to vulcanize the tires, in a suitable mold, may therefore, for example, have a duration of 10 to 14 minutes for a passenger tire and for 25 to 55 minutes for a truck tire.

Whereas the embodiment shown in Fig. 2 has a sealant layer 7 placed on the inner liner 6 and covered or enclosed by the barrier layer 9 (or alternatively by the carcass 4 (not shown in Fig. 2)), Fig. 3 shows an embodiment of the invention where the sealant layer 7 is divided into a plurality of cells 11. These cells 11 are preferably arranged substantially in parallel adjacent to each other. Preferably, the cells are separated from each other by at least one partition wall 10 having a thickness in a range of from 0.3 mm to 4 mm for instance. The example of Fig. 3 shows six adjacent cells filled by the sealant and separated from each other by five partition walls 10. The partition walls may be made of the material of the barrier layer 9, of the material of the innerliner 6, of an other rubber material, of a silicone coated liner or of a siloxane coated nylon cloth for instance. The number of cells 11 is largely a matter of choice and can for instance vary from 2 to 10, alternatively from 3 to 7. The width of the cells 11 shown in Fig. 3 is preferably in the range of 1.5 to 12 cm. More preferably, the width is 2 to 4 cm. It should also be emphasized that the width of the cells needs not to be the same and that the cells can be arranged in a symmetrical (as shown in Fig. 3) or an asymmetrical way with regard to the equatorial plane of the tire 2. The cells 11 may also have tapered sidewalls. One method to create the plurality of cells 11 made or filled with sealent is mounting the inner liner 6 onto a tire building drum, extruding the sealant composition into at least one strip substantially having the width of the cell 11 to be created, hellically winding the stip over the inner liner 6, and layering the barrier layer 9 (or alternatively the carcass 4 over the at least one strip mounted over the inner liner. The partition walls 10 are preferably applied as a sidewall on at least one side of the strip before winding it over the inner liner 6. They may also be extruded together with the sealant composition and applied as thin rubber layer on one or both sidewalls of the extruded sealant strip.

## Claims

1. A method of making a tire with a built-in sealant, the method comprising the steps of mounting an inner liner (6) onto a tire building drum, and extruding a sealant composition comprising a colorant of other than black color, wherein said colorant is selected from at least one of organic pigments, inorganic pigments and dyes, into at least one strip (7), wherein the method further comprises the steps of cutting the at least one strip (7) to a desired length, mounting the at least one strip cut to length over the inner liner (6), and layering a tire component (9) over the at least one strip (7) cut to length mounted over the inner liner (6), the strip having a width in the range of 1.5 cm to 12 cm and a thickness of 0.125 cm to 1.9 cm.

2. The method of claim 1, wherein the strip has a width in a range from 2 cm to 4 cm.

3. The method of at least one of the previous claims, wherein the at least one strip has one or two tapered sidewalls.

4. The method of claim 3, wherein the tapered sidewall has a taper angle of from 15° to 30°.

5. The method of at least one of the previous claims, wherein the sealant comprises based upon parts by weight per 100 parts by weight of partially depolymerized butyl rubber exclusive of carbon black:
(A) a partially organoperoxide-depolymerized butyl rubber as a copolymer of isobutylene and isoprene, wherein said butyl rubber, prior to such depolymerization comprises 0.5 to 5 percent units derived from isoprene, and correspondingly from 95 to 99.5 weight percent units derived from isobutylene;
(B) a particulate reinforcing filler comprising:
(1) 20 to 50 phr of synthetic amorphous silica, or
(2) 15 to 30 phr synthetic amorphous silica, preferably precipitated silica, and 5 to 20 phr of clay, or
(3) 15 to 30 phr synthetic amorphous silica and 5 to 20 phr of calcium carbonate, or
(4) 15 to 30 phr synthetic amorphous silica, 5 to 15 phr of clay and 5 to 15 phr of calcium carbonate;
(C) from zero to 6 phr of short organic fibers;
(D) a colorant of other than a black color wherein said colorant is selected from at least one of organic pigments, inorganic pigments and dyes; and
(E) from zero to 20 phr of rubber processing oil.

6. A tire having a built-in sealant (7) being arranged over an inner liner (6) of the tire, the built-in sealant being covered by a tire component, wherein the tire component is a barrier layer (9) or a carcass which encloses the built-in sealant together with the inner liner (6), **characterized in that** the built-in sealant is a colored sealant and comprises based upon parts by weight per 100 parts by weight of partially depolymerized butyl rubber exclusive of carbon black:
(A) a partially organoperoxide-depolymerized butyl rubber as a copolymer of isobutylene and isoprene, wherein said butyl rubber, prior to such depolymerization comprises 0.5 to 5 percent units derived from isoprene, and correspondingly from 95 to 99.5 weight percent units derived from isobutylene;
(B) a particulate reinforcing filler comprising:
(1) 20 to 50 phr of synthetic amorphous silica, or
(2) 15 to 30 phr synthetic amorphous silica, preferably precipitated silica, and 5 to 20 phr of clay, or
(3) 15 to 30 phr synthetic amorphous silica and 5 to 20 phr of calcium carbonate, or
(4) 15 to 30 phr synthetic amorphous silica, 5 to 15 phr of clay and 5 to 15 phr of calcium carbonate;
(C) from zero to 6 phr of short organic fibers;
(D) a colorant of other than a black color wherein said colorant is selected from at least one of organic pigments, inorganic pigments and dyes; and
(E) from zero to 20 phr of rubber processing oil.

7. The tire of claim 6, **characterized in that** the built-in colored sealant is located in a plurality of adjacent cells (11), the cells being separated from each other by at least one partition wall and being further confined by the inner liner (6) and the tire component.

## Patentansprüche

1. Verfahren zur Herstellung eines Reifens mit einem eingebrachten Dichtmittel, wobei das Verfahren die Schritte des Montierens einer Innenisolierung (6) an einer Reifenbautrommel, und Extrudierens einer Dichtmittelzusammensetzung, die einen Farbstoff von einer anderen als schwarzer Farbe enthält, wobei dieser Farbstoff aus mindestens einem von organischen Pigmenten, anorganischen Pigmenten und Farben ausgewählt ist, zu mindestens einem Streifen (7) umfasst, wobei das Verfahren weiter die Schritte des Zerschneidens des mindestens einen Streifens (7) auf eine gewünschte Länge, Montierens des auf Länge geschnittenen, mindestens einen Streifens über der Innenisolierung (6) und lagenweisen Anbringens eines Reifenbauteils (9) über dem über der Innenisolierung (6) montierten, auf Länge geschnittenen mindestens einen Streifens (7) umfasst, wobei der Streifen eine Breite im Bereich von 1,5 cm bis 12 cm und eine Dicke von 0,125 cm bis 1,9 cm aufweist.

2. Verfahren nach Anspruch 1, wobei der Streifen eine Breite in einem Bereich von 2 cm bis 4 cm aufweist.

3. Verfahren nach mindestens einem der vorgenannten Ansprüche, wobei der mindestens eine Streifen ein oder zwei sich verjüngende Seitenwände aufweist.

4. Verfahren nach Anspruch 3, wobei die sich verjüngende Seitenwand einen Verjüngungswinkel von 15° bis 30° aufweist.

5. Verfahren nach mindestens einem der vorgenannten Ansprüche, wobei das Dichtmittel, auf Basis von Gewichtsteilen pro 100 Gewichtsteile teilweise depolymerisierten Butylkautschuks unter Ausschluss von Carbon Black, umfasst:
(A) einen teilweise Organoperoxid-depolymerisierten Butylkautschuk als ein Copolymer von Isobutylen und Isopren, wobei der Butylkautschuk vor solcher Depolymerisation 0,5 bis 5 von Isopren stammende Prozenteinheiten und entsprechend 95 bis 99,5 von Isobutylen stammende Prozenteinheiten umfasst;
(B) einen partikelförmigen Verstärkungsfüllstoff, umfassend:
(1) 20 bis 50 ThK synthetisches amorphes Silika, oder
(2) 15 bis 30 ThK synthetisches amorphes Silika, bevorzugt ausgefälltes Silika, und 5 bis 20 ThK Ton, oder
(3) 15 bis 30 ThK synthetisches amorphes Silika und 5 bis 20 ThK Calciumcarbonat, oder
(4) 15 bis 30 ThK synthetisches amorphes Silika, 5 bis 15 ThK Ton und 5 bis 15 ThK Calciumcarbonat;
(C) null bis 6 ThK organische Kurzfasern;
(D) einen Farbstoff von einer anderen als schwarzer Farbe, wobei der Farbstoff aus mindestens einem von organischen Pigmenten, anorganischen Pigmenten und Farben ausgewählt ist;
(E) null bis 20 ThK Kautschukprozessöl.

6. Reifen mit einem eingebrachten Dichtmittel (7), das über einer Innenisolierung (6) des Reifens angeordnet ist, wobei das eingebrachte Dichtmittel von einem Reifenbauteil bedeckt ist, wobei das Reifenbauteil eine Barriereschicht (9) oder eine Karkasse ist, die das eingebrachte Dichtmittel zusammen mit der Innenisolierung (6) umschließt, **dadurch gekennzeichnet, dass** das eingebaute Dichtmittel ein farbiges Dichtmittel ist und, auf Basis von Gewichtsteilen pro 100 Gewichtsteile teilweise depolymerisierten Butylkautschuks unter Ausschluss von Carbon Black, umfasst:
(A) einen teilweise Organoperoxid-depolymerisierten Butylkautschuk als ein Copolymer von Isobutylen und Isopren, wobei der Butylkautschuk vor solcher Depolymerisation 0,5 bis 5 von Isopren stammende Prozenteinheiten und entsprechend 95 bis 99,5 von Isobutylen stammende Prozenteinheiten umfasst;
(B) einen partikelförmigen Verstärkungsfüllstoff, umfassend:
(1) 20 bis 50 ThK synthetisches amorphes Silika, oder
(2) 15 bis 30 ThK synthetisches amorphes Silika, bevorzugt ausgefälltes Silika, und 5 bis 20 ThK Ton, oder
(3) 15 bis 30 ThK synthetisches amorphes Silika und 5 bis 20 ThK Calciumcarbonat, oder
(4) 15 bis 30 ThK synthetisches amorphes Silika, 5 bis 15 ThK Ton und 5 bis 15 ThK Calciumcarbonat;
(C) null bis 6 ThK organische Kurzfasern;
(D) einen Farbstoff von einer anderen als schwarzer Farbe, wobei der Farbstoff aus mindestens einem von organischen Pigmenten, anorganischen Pigmenten und Farben ausgewählt ist;
(E) null bis 20 ThK Kautschukprozessöl.

7. Reifen nach Anspruch 6, **dadurch gekennzeichnet, dass** das eingebrachte Dichtmittel sich in einer Vielzahl benachbarter Zellen (11) befindet, wobei die Zellen durch mindestens eine Trennwand voneinander getrennt sind und weiter durch die Innenisolierung (6) und das Reifenbauteil begrenzt werden.

## Revendications

1. Procédé de confection du bandage pneumatique comprenant un agent d'étanchéité incorporé, le procédé comprenant les étapes consistant à monter un calandrage intérieur (6) sur un tambour de confection de bandage pneumatique et à extruder une composition d'agent d'étanchéité comprenant une matière colorante différente de la couleur noire, ladite matière colorante étant choisie parmi au moins un membre du groupe comprenant des pigments organiques, des pigments inorganiques et des colorants, dans au moins une bande (7), le procédé comprenant en outre les étapes consistant à découper ladite au moins une bande (7) à une longueur désirée, à monter ladite au moins une bande découpée à longueur, par-dessus le calandrage intérieur (6) et à poser le composant de bandage pneumatique (9) par dessus ladite au moins une bande (7) découpée à longueur et montée par-dessus le calandrage intérieur (6), la bande possédant une largeur dans la plage de 1,5 cm à 12 cm, et une épaisseur de 0,125 cm à 1,9 cm.

2. Procédé selon la revendication 1, dans lequel la bande possède une largeur dans la plage de 2 cm à 4 cm.

3. Procédé selon au moins une des revendications précédentes, dans lequel ladite au moins une bande possède un ou deux flancs de forme conique.

4. Procédé selon la revendication 3, dans lequel le flanc conique possède un angle de conicité de 15° à 30°.

5. Procédé selon au moins une des revendications précédentes, dans lequel l'agent d'étanchéité comprend, en se basant sur des parties en poids par 100 parties en poids de caoutchouc butyle partiellement dépolymérisé, à l'exclusion du noir de carbone :
(A) un caoutchouc butyle partiellement dépolymérisé par un organoperoxyde, tel qu'un copolymère d'isobutylène et d'isoprène, ledit caoutchouc butyle, avant ladite dépolymérisation comprend, à concurrence de 0,5 à 5 %, des unités qui dérivent de l'isoprène et, de manière correspondante, à concurrence de 95 à 99,5 % en poids, des unités qui dérivent de l'isobutylène ;
(B) une matière de charge du renforcement particulaire comprenant :
(1) à concurrence de 20 à 50 phr, de la silice amorphe synthétique ; ou
(2) à concurrence de 15 à 30 phr, de la silice amorphe synthétique, de préférence de la silice précipitée, et à concurrence de 5 à 20 phr, de l'argile ; ou
(3) à concurrence de 15 à 30 phr, de la silice amorphe synthétique et à concurrence de 5 à 20 phr, du carbonate de calcium ; ou
(4) à concurrence de 15 à 30 phr, de la silice amorphe synthétique, à concurrence de 5 à 15 phr, l'argile et, à concurrence de 5 à 15 phr, du carbonate de calcium ;
(C) à concurrence de zéro à 6 phr, de courtes fibres organiques ;
(D) une matière colorante différente d'une couleur noire, ladite matière colorante étant choisie parmi au moins un membre du groupe comprenant des pigments organiques, des pigments inorganiques et des colorants ; et
(E) à concurrence de zéro à 20 phr, une huile plastifiante pour le caoutchouc.

6. Bandage pneumatique possédant un agent d'étanchéité incorporé (7) arrangé par-dessus un calandrage intérieur (6) du bandage pneumatique, l'agent d'étanchéité incorporé étant recouvert par un composant de bandage pneumatique, le composant de bandage pneumatique étant une couche d'arrêt (9) ou une carcasse qui renferme l'agent d'étanchéité incorporé conjointement avec le calandrage intérieur (6), **caractérisé en ce que** l'agent d'étanchéité incorporé est un agent d'étanchéité coloré et comprend, en se basant sur des parties en poids par 100 parties en poids de caoutchouc butyle partiellement dépolymérisé, à l'exclusion du noir de carbone :
(A) un caoutchouc butyle partiellement dépolymérisé par un organoperoxyde, tel qu'un copolymère d'isobutylène et d'isoprène, ledit caoutchouc butyle, avant ladite dépolymérisation comprend, à concurrence de 0,5 à 5 %, des unités qui dérivent de l'isoprène et, de manière correspondante, à concurrence de 95 à 99,5 % en poids, des unités qui dérivent de l'isobutylène ;
(B) une matière de charge du renforcement particulaire comprenant :
(1) à concurrence de 20 à 50 phr, de la silice amorphe synthétique ; ou
(2) à concurrence de 15 à 30 phr, de la silice amorphe synthétique, de préférence de la silice précipitée, et à concurrence de 5 à 20 phr, de l'argile ; ou
(3) à concurrence de 15 à 30 phr, de la silice amorphe synthétique et à concurrence de 5 à 20 phr, du carbonate de calcium ; ou
(4) à concurrence de 15 à 30 phr, de la silice amorphe synthétique, à concurrence de 5 à 15 phr, l'argile et, à concurrence de 5 à 15 phr, du carbonate de calcium ;
(C) à concurrence de zéro à 6 phr, de courtes fibres organiques ;
(D) une matière colorante différente d'une couleur noire, ladite matière colorante étant choisie parmi au moins un membre du groupe comprenant des pigments organiques, des pigments inorganiques et des colorants ; et
(E) à concurrence de zéro à 20 phr, une huile plastifiante pour le caoutchouc.

7. Bandage pneumatique selon la revendication 6, **caractérisé en ce que** l'agent d'étanchéité coloré incorporé est disposé dans plusieurs cellules adjacentes (11), les cellules étant séparées les unes des autres par au moins une paroi de séparation et étant en outre confinées par le calandrage intérieur (6) et par le composant de bandage pneumatique.
